# EUROPEAN PATENT APPLICATION

(11) **EP 4 645 792 A1**
(43) Date of publication of application: **05.11.2025**
(21) Application number: 23915358.8
(22) Date of filing: 12.01.2023
(51) Int. Cl.: H04L 41/06, H04L 101/663

(54) **DEVICE POWER FAILURE ALARM METHOD AND APPARATUS**

(71) Applicant: Huawei Technologies Co., Ltd., Shenzhen, Guangdong 518129 (CN)
(72) Inventor: XUE, Wan, Shenzhen, Guangdong 518129 (CN); GUO, Ziyu, Shenzhen, Guangdong 518129 (CN); MA, Ning, Shenzhen, Guangdong 518129 (CN)
(74) Representative: Körber, Martin Hans
(86) International application number: PCT/CN2023/071982
(87) International publication number: WO 2024/148588

(57) **Abstract**

A device power failure alarm method and apparatus are provided, to optimize the handling of a device power failure alarm. After determining a UDP power failure alarm message, a first device buffers the UDP power failure alarm message. The first device sends the UDP power failure alarm message to a network manager after a power failure interrupt. The network manager determines, according to the UDP power failure alarm message, that a power failure occurs in the first device. In this way, the first device can report the power failure alarm message through a UDP channel, reducing power failure alarm reporting time.

## Description

### TECHNICAL FIELD

This application relates to the field of communication technologies, and in particular to a device power failure alarm method and apparatus.

### BACKGROUND

Currently, a baseband unit (baseband unit, BBU) or radio unit (radio unit, RU) or the like may be out of service for a variety of reasons, such as a faulty Ethernet (Ethernet, ETH) port, a faulty transmission device, and a power failure of the BBU/RU or the like. If a network manager does not know the cause of link interruption of the BBU/RU or the like, operation and maintenance may become difficult. Therefore, when the BBU/RU or the like does not have backup power, the device needs to be able to report a device power failure alarm so that an operator can accurately dispatch a ticket to a department after the BBU/RU or the like is out of service. However, currently, the device power failure alarm is sent in user mode through a transmission control protocol (transmission control protocol, TCP) channel, which takes a long time or causes a failure to report the power failure alarm.

### SUMMARY

This application provides a device power failure alarm method and apparatus, to optimize the handling of a device power failure alarm.

According to a first aspect, this application provides a device power failure alarm method. The method may include the following: After determining a user datagram protocol (user datagram protocol, UDP) power failure alarm message, a first device buffers the UDP power failure alarm message; and then, the first device sends the UDP power failure alarm message to a network manager after a power failure interrupt.

With the foregoing method, the first device can report the power failure alarm message through a UDP channel, reducing power failure alarm reporting time.

In a possible design, a method for buffering, by the first device, the UDP power failure alarm message may be as follows: The first device may buffer the UDP power failure alarm message into kernel mode of the first device. In this way, the UDP power failure alarm message may be buffered in advance, so that after the power failure interrupt of the first device, the kernel mode of the first device can send the message directly to a forwarding plane system for processing, so as to reduce device power failure alarm reporting time.

In a possible design, a method for buffering, by the first device, the UDP power failure alarm message into the kernel mode of the first device may be as follows: The first device may buffer the UDP power failure alarm message into the kernel mode of the first device using any of the following methods: completing user and kernel data transmission (/netlink), writing to a process file system (/procfs), writing kernel control parameters (/sysctl), reading kernel files (/sysfs), or the like. In this way, the UDP power failure alarm message can be flexibly and accurately buffered.

In a possible design, a method for sending, by the first device, the UDP power failure alarm message to the network manager may be as follows: The first device may send the UDP power failure alarm message to the network manager according to a priority of the UDP power failure alarm message. In this way, the priority of the UDP power failure alarm message may be raised, ensuring that the UDP power failure alarm message is preferentially sent.

In a possible design, a method for sending, by the first device, the UDP power failure alarm message to the network manager may be as follows: The first device may send the UDP power failure alarm message from the kernel mode of the first device to a forwarding plane system of the first device; and then the first device sends the UDP power failure alarm message to the network manager via the forwarding plane system. In this way, the UDP power failure alarm message can be successfully reported.

In a possible design, a method for sending, by the first device, the UDP message to the network manager via the forwarding plane system may be as follows: The first device may send the UDP power failure alarm message to the network manager via the forwarding plane system according to a priority of the UDP power failure alarm message. In this way, the priority of the UDP power failure alarm message may be raised, ensuring that the UDP power failure alarm message is preferentially sent.

In a possible design, the priority of the UDP power failure alarm message is higher than sending priorities of some or all messages other than the UDP power failure alarm message. In this way, the priority of the UDP power failure alarm message may be raised, ensuring that the UDP power failure alarm message is preferentially sent.

In a possible design, the priority of the UDP power failure alarm message is a differentiated services code point (differentiated services code point, DSCP) priority or a virtual local area network (virtual local area network, VLAN) priority. In this way, it can be ensured that the UDP power failure alarm message has a high priority.

In a possible design, before the first device determines the UDP power failure alarm message, the first device may load a first program to the kernel mode of the first device, where the first program may be used to trigger at least one of the following processing: sending the UDP power failure alarm message according to the power failure interrupt, buffering the UDP power failure alarm message, or associating power failure interrupt handling with the power failure interrupt. In this way, the first device can support reporting of the UDP power failure alarm message, so as to reduce time consumed by power failure alarming.

In a possible design, the first device may determine the UDP power failure alarm message using the following method: The first device may determine the UDP power failure alarm message based on a UDP port number of the first device, a source Internet Protocol (internet protocol, IP) address, a destination IP address, and a UDP port number of the network manager, where the source IP address and the destination IP address are used for a connection between the network manager and the first device. In this way, the UDP power failure alarm message to be buffered can be accurately determined.

In a possible design, the UDP port number of the network manager may be received by the first device from the network manager; or the UDP port number of the network manager may be preset.

In a possible design, the first device may receive a first key from the network manager, and then the first device encrypts the UDP power failure alarm message based on the first key. In this way, security of the UDP power failure alarm message can be ensured.

In a possible design, the first key may be generated based on a random number, or based on an identifier of the first device.

In a possible design, the first device may buffer the UDP power failure alarm message in the following cases: The first device may buffer the UDP power failure alarm message after the first device establishes a connection to the network manager; or the first device may buffer the UDP power failure alarm message after a reconnection due to a change of an IP address of the first device and/or the network manager; or the first device periodically buffers the UDP power failure alarm message. In this way, it can be ensured that the UDP power failure alarm message is successfully buffered.

In a possible design, the UDP power failure alarm message may include the identifier of the first device, so that the network manager subsequently identifies that the UDP power failure alarm message is reported by the first device.

According to a second aspect, this application provides a device power failure alarm method. The method may include the following: After receiving a UDP power failure alarm message from a first device, a network manager determines, according to the UDP power failure alarm message, that a power failure occurs in the first device.

With the foregoing method, the first device can report the power failure alarm message through a UDP channel, reducing power failure alarm reporting time.

In a possible design, the network manager may send a UDP port number of the network manager to the first device, so that the first device determines the UDP power failure alarm message based on the UDP port number of the network manager.

In a possible design, the network manager may send a first key to the first device, where the first key is used to encrypt the UDP power failure alarm message. In this way, security of the UDP power failure alarm message can be ensured.

In a possible design, the network manager may generate the first key based on a random number; or the network manager may generate the first key based on an identifier of the first device. In this way, the network manager can flexibly determine the first key.

In a possible design, the network manager may record a correspondence between the first key and the first device, so that the first key used to decrypt the UDP power failure alarm message corresponding to the first device is subsequently determined based on the correspondence.

In a possible design, the correspondence between the first key and the first device may be a correspondence between the first key and an IP address of the first device, or a correspondence between the first key and the identifier of the first device.

In a possible design, the network manager may determine the first key corresponding to the first device according to the correspondence between the first key and the first device, so that the network manager can decrypt the UDP power failure alarm message based on the first key. In this way, the network manager can accurately decrypt the UDP power failure alarm message.

In a possible design, a method for determining, by the network manager, the first key corresponding to the first device according to the correspondence between the first key and the first device may be as follows: The network manager may determine the first key corresponding to the IP address of the first device according to the IP address of the first device and the correspondence between the first key and the first device. Alternatively, the network manager may determine the first key corresponding to the identifier of the first device according to the identifier of the first device included in the UDP power failure alarm message and the correspondence between the first key and the first device. In this way, the network manager can accurately determine the first key, so as to successfully decrypt the UDP power failure alarm message.

According to a third aspect, this application further provides a device power failure alarm apparatus. The device power failure alarm apparatus may be a first device. The device power failure alarm apparatus has a function of implementing the first aspect or the possible design examples of the first aspect. The function may be implemented by hardware, or may be implemented by hardware executing corresponding software. The hardware or the software includes one or more modules corresponding to the foregoing function.

In a possible design, a structure of the device power failure alarm apparatus includes a communication unit and a processing unit. These units may perform corresponding functions in the first aspect or the possible design examples of the first aspect. For details, refer to detailed descriptions in the method examples. Details are not described herein.

In a possible design, a structure of the device power failure alarm apparatus includes a communication interface and a processor, and, optionally, further includes a memory. The communication interface is configured to receive and send a message or data, and to communicate and interact with another device in a system. The processor is configured to support the device power failure alarm apparatus in performing a corresponding function in the first aspect or the possible design examples of the first aspect. The memory is coupled to the processor, and stores program instructions and data necessary for the device power failure alarm apparatus.

According to a fourth aspect, this application further provides a device power failure alarm apparatus. The device power failure alarm apparatus may be a network manager. The device power failure alarm apparatus has a function of implementing the second aspect or the possible design examples of the second aspect. The function may be implemented by hardware, or may be implemented by hardware executing corresponding software. The hardware or the software includes one or more modules corresponding to the foregoing function.

In a possible design, a structure of the device power failure alarm apparatus includes a communication unit and a processing unit. These units may perform corresponding functions in the second aspect or the possible design examples of the second aspect. For details, refer to detailed descriptions in the method examples. Details are not described herein.

In a possible design, a structure of the device power failure alarm apparatus includes a communication interface and a processor, and, optionally, further includes a memory. The communication interface is configured to receive and send a message or data, and to communicate and interact with another device in a system. The processor is configured to support the device power failure alarm apparatus in performing a corresponding function in the second aspect or the possible design examples of the second aspect. The memory is coupled to the processor, and stores program instructions and data necessary for the device power failure alarm apparatus.

According to a fifth aspect, an embodiment of this application provides a system. The system may include a first device, and the first device may be configured to perform an operation in the first aspect and any method in the first aspect.

In a possible design, the system may further include a network manager, and the network manager may be configured to perform an operation in the second aspect and any method in the second aspect.

According to a sixth aspect, an embodiment of this application provides a computer-readable storage medium. The computer-readable storage medium stores program instructions; and when the program instructions are run on a computer, the computer is enabled to perform the method according to any one of the first aspect and the possible designs of the first aspect in embodiments of this application, or the method according to any one of the second aspect and the possible designs of the second aspect in embodiments of this application. For example, the computer-readable storage medium may be any usable medium that can be accessed by the computer. As an example rather than a limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can carry or store desired program code in the form of instructions or a data structure and that can be accessed by the computer.

According to a seventh aspect, an embodiment of this application provides a computer program product including computer program code or instructions. When the computer program code or the instructions are run on a computer, the method according to any one of the first aspect or the possible designs of the first aspect, or the method according to any one of the second aspect or the possible designs of the second aspect is performed.

According to an eighth aspect, this application further provides a chip, including a processor. The processor is coupled to a memory and configured to read and execute program instructions stored in the memory, so that the chip implements the method in the first aspect or any possible design of the first aspect or in the second aspect or any possible design of the second aspect.

For each of the third aspect to the eighth aspect and technical effects that can be achieved in the aspect, refer to the foregoing descriptions of the technical effects that can be achieved in the first aspect or the possible solutions in the first aspect or in the second aspect or the possible solutions in the second aspect. Details are not described herein again.

### BRIEF DESCRIPTION OF DRAWINGS

FIG. 1a is a diagram of a system architecture according to this application;
FIG. 1b is a diagram of a structure of an access network device according to this application;
FIG. 2 is a diagram of receiving different alarm messages by a network manager according to this application;
FIG. 3 is a flowchart of a device power failure alarm method according to this application;
FIG. 4 is a diagram of an implementation process of a first device buffering and forwarding a UDP power failure alarm message according to this application;
FIG. 5 is a flowchart of an example of a device power failure alarm method according to this application;
FIG. 6 is a diagram of a structure of a device power failure alarm apparatus according to this application; and
FIG. 7 is a diagram of a structure of a device power failure alarm apparatus according to this application.

### DESCRIPTION OF EMBODIMENTS

Embodiments of this application are described in detail below with reference to the accompanying drawings.

An embodiment of this application provides a device power failure alarm method and apparatus, to optimize the handling of a device power failure alarm. The method and the apparatus in this application are based on the same technical concept. Because problem-solving principles of the method and the apparatus are similar, mutual reference may be made to implementations of the apparatus and the method, and repeated parts are not described.

In the description of this application, words such as "first" and "second" are merely used for distinguishing between descriptions, and cannot be understood as an indication or implication of relative importance, or understood as an indication of implication of an order.

In the description of this application, "at least one (type)" means one or more (types), and "a plurality of (types)" means two or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the description of this application, "and/or" describes an association relationship between associated objects, and indicates that three relationships may exist. For example, A and/or B may indicate the following cases: Only A exists, both A and B exist, and only B exists, where A and B may be singular or plural. In addition, "/" indicates "or". For example, a/b indicates a or b.

To describe the technical solutions in embodiments of this application more clearly, a communication method and apparatus provided in embodiments of this application are described in detail below with reference to the accompanying drawings.

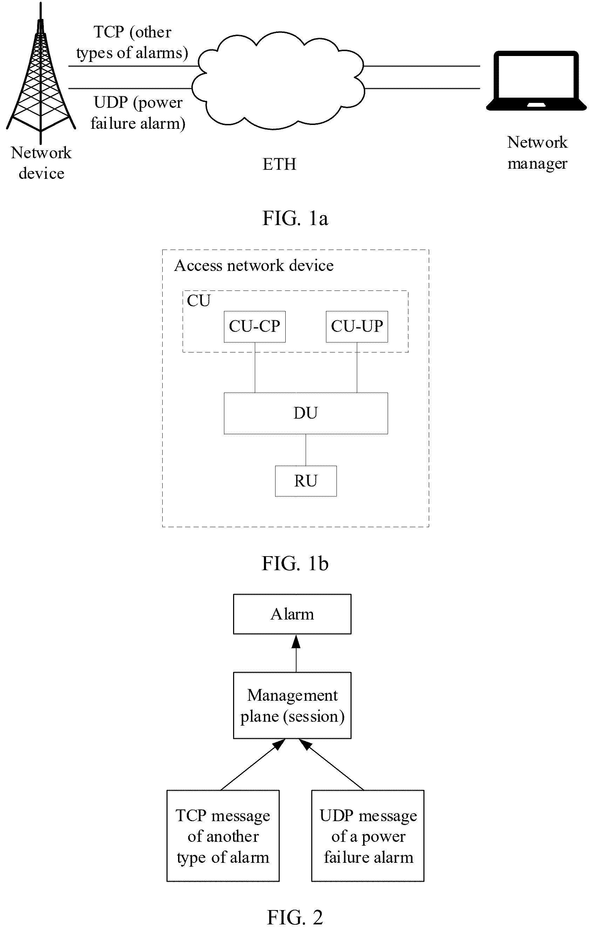

FIG. 1a shows a possible system architecture to which a device power failure alarm method according to this application is applicable. The system architecture may include a network device, a network, and a network manager. The network device may report an alarm message to the network manager. For example, as shown in FIG. 1a, a power failure alarm may be performed between the network device and the network manager through a user datagram protocol (user datagram protocol, UDP) channel, while another type of alarm other than the power failure alarm may be realized through a transmission control protocol (transmission control protocol, TCP) channel between the network device and the network manager. As shown in FIG. 2, the network manager may receive a UDP message used for a power failure alarm and TCP messages used for another type of alarm, and then handle the corresponding alarms.

The network device may be a radio access network (radio access network, RAN) device, which may include base stations in various forms, for example, a macro base station, a micro base station (also referred to as a small cell), a relay station, and an access point. The network device may be an evolved NodeB (evolved NodeB, eNB) in a 4G system, a next-generation base station (next-generation NodeB, gNB) in a 5G system, a base station in a 6G system or a base station in another system evolved after 5G, or an access network device in an open access network (open RAN, ORAN) system or a module of the access network device or the like. Specifically, the network device may include, but is not limited to, a home base station (for example, a home evolved NodeB or a home NodeB, HNB), a BBU, an active antenna unit (active antenna system, AAU), a wireless relay node, a wireless backhaul node, a transmission point (transmission point, TP) or a transmission reception point (transmission reception point, TRP), or one antenna panel or a group of antenna panels (including a plurality of antenna panels) of a base station in a 5G mobile communication system. Alternatively, the access network device may be a module or unit capable of some functionalities of the access network device, for example, a module or unit in a diagram of an access network device in FIG. 1b. For example, the access network device may be a central unit (central unit, CU), a distributed unit (distributed unit, DU), a CU control plane (control plane, CP), a CU user plane (user plane, UP), or a radio unit (radio unit, RU). As shown in FIG. 1b, the access network device includes one or more central units (central unit, CU), one or more distributed units (distributed unit, DU), and one or more radio units (radio unit, RU). For clarity, FIG. 1b shows only one CU, one DU, and one RU. The CU is configured to be connected to a core network and one or more DUs. Optionally, the CU may have some functionalities of the core network. The CU may include a CU control plane (control plane, CP) and a CU user plane (user plane, UP).

The CU and the DU may be configured based on protocol layer functionalities of a wireless network implemented by the CU and the DU. For example, the CU is configured to implement functionalities of a packet data convergence protocol (packet data convergence protocol, PDCP) layer and higher protocol layers (for example, a radio resource control (radio resource control, RRC) layer and/or a service data adaptation protocol (service data adaptation protocol, SDAP) layer). The DU is configured to implement functionalities of protocol layers (for example, a radio link control (radio link control, RLC) layer, a medium access control (media access control, MAC) layer, and/or a physical (physical, PHY) layer) lower than the PDCP layer. For another example, the CU is configured to implement functionalities of protocol layers (for example, the RRC layer and/or the SDAP layer) higher than the PDCP layer, and the DU is configured to implement functionalities of the PDCP layer and protocol layers (for example, the RLC layer, the MAC layer, and/or the PHY layer) lower than the PDCP layer.

When the CU includes the CU-CP and the CU-UP, the CU-CP is configured to implement a control plane functionality of the CU, and the CU-UP is configured to implement a user plane functionality of the CU. For example, when the CU is configured to implement the functionalities of the PDCP layer, the RRC layer, and the SDAP layer, the CU-CP is configured to implement an RRC layer functionality and a control plane functionality of the PDCP layer, and the CU-UP is configured to implement an SDAP layer functionality and a user plane functionality of the PDCP layer.

The CU-CP may interact with a network element in the core network that is configured to implement a control plane functionality. The network element in the core network that is configured to implement the control plane functionality may be an access and mobility function network element, for example, an AMF (access and mobility management function) in a 5G system. The access and mobility function network element is configured to be responsible for mobility management in a mobile network, for example, location update of a terminal device, registration network of a terminal device, and handover of a terminal device.

The CU-UP may interact with a network element in the core network that is configured to implement a user plane functionality. The network element in the core network that is configured to implement the user plane functionality, for example, is a UPF (User Plane Function) in a 5G system, which is configured to be responsible for forwarding and receiving data in a terminal device.

The foregoing configuration of the CU and the DU is merely an example. Alternatively, the functionalities of the CU and the DU may be configured as required. For example, the CU or the DU may be configured to have functionalities of more protocol layers, or the CU or the DU may be configured to have some of the processing functionalities of a protocol layer. For example, some functionalities of the RLC layer and functionalities of protocol layers higher than the RLC layer are configured on the CU, and the remaining functionalities of the RLC layer and functionalities of protocol layers lower than the RLC layer are configured on the DU. For another example, functionalities of the CU or the DU may be divided according to service types or other system requirements. For example, the functionalities are divided by latency. Functionalities whose processing time needs to satisfy a low-latency requirement are configured on the DU, and functionalities whose processing time does not need to satisfy the latency requirement are configured on the CU.

The DU and the RU may cooperate to implement functionalities of the PHY layer. One DU may be connected to one or more RUs. Functionalities of the DU and the RU may be configured in a variety of manners according to the design. For example, the DU is configured to implement a baseband functionality, and the RU is configured to implement an intermediate and radio frequency functionality. For another example, the DU is configured to implement a higher-layer functionality of the PHY layer, and the RU is configured to implement a lower-layer functionality of the PHY layer or implement the lower-layer functionality and the radio frequency functionality. The higher-layer functionality of the physical layer may include a part of functionality of the physical layer, and the part of functionality is closer to the MAC layer. The lower-layer functionality of the physical layer may include another part of functionality of the physical layer, and the part of functionality is closer to the intermediate and radio frequency side.

Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. The CU and the DU may be separately disposed, or may be included in a same network element, for example, a baseband unit (baseband unit, BBU). The RU may be included in a radio frequency device or a radio frequency unit, for example, in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. In an ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. In the ORAN system, a correspondence between ORAN network elements and protocol layer functionalities that can be implemented by the ORAN network elements may be shown in Table 1:

**Table 1**

| ORAN network element | 3GPP protocol layer functionality |
|---|---|
| O-CU-CP | RRC+PDCP-C |
| O-CU-UP | SDAP+PDCP-U |
| O-DU | RLC+MAC+PHY-high |
| O-RU | PHY-low |

For ease of description, the CU, the CU-CP, the CU-UP, the DU, and the RU are used as examples for description in this application. Any of the CU (or the CU-CP or the CU-UP), the DU, and the RU in this application may be implemented by a software module, a hardware module, or a combination thereof.

The network may be Ethernet (ethernet, ETH) or the like.

It should be noted that the system architecture shown in FIG. 1a is merely an example, and may also be in another form or may further include other devices. This is not limited in this application.

Currently, in the case of a network device reporting a power failure alarm message, a management plane channel is usually established between the network device and a network manager using TCP, so as to implement power failure alarm reporting. Specifically, after receiving a power outage interrupt in Linux kernel mode, the network device sends the power outage interrupt to a user mode first-in, first-out (first in, first out, FIFO) task, and sends a TCP message via a forwarding system using a user mode protocol stack. However, TCP message transmission takes a long time, and after a power failure, the network device works for a short time. Alarm reporting through TCP cannot ensure that the message can be sent to the network manager immediately. The main reasons are as follows: TCP is stateful and is a connection-oriented protocol. Additionally, TCP has a retransmission mechanism, which cannot guarantee the successful transmission of the message. If the first five messages fail to be sent, the sixth power failure alarm message cannot be sent either. In addition, when using a TCP message for a power failure alarm, the network device needs to perform task switching. Moreover, a TCP socket (socket) involves semaphore protection, and time cannot be ensured. In view of this, embodiments of this application provide a device power failure alarm method and apparatus. Because a UDP message may be buffered in advance without being subjected to user-mode protocol stack processing, a power failure alarm message can be reported through a UDP channel to reduce power failure alarm reporting time.

In the following implementation, the device power failure alarm method provided in embodiments of this application is described in detail by using a first device and a network manager as an example. It should be understood that an operation performed by the first device may also be implemented by a processor in the first device, a chip or a chip system, a functional module, or the like. This is not limited in this application. An operation performed by the network manager may also be implemented by a processor in the network manager, a chip or a chip system, a functional module, or the like. This is not limited in this application. Optionally, the first device may be the network device in FIG. 1a, or a module or unit in the network device, for example, a BBU or an RU, where the RU may be an O-RU or the like.

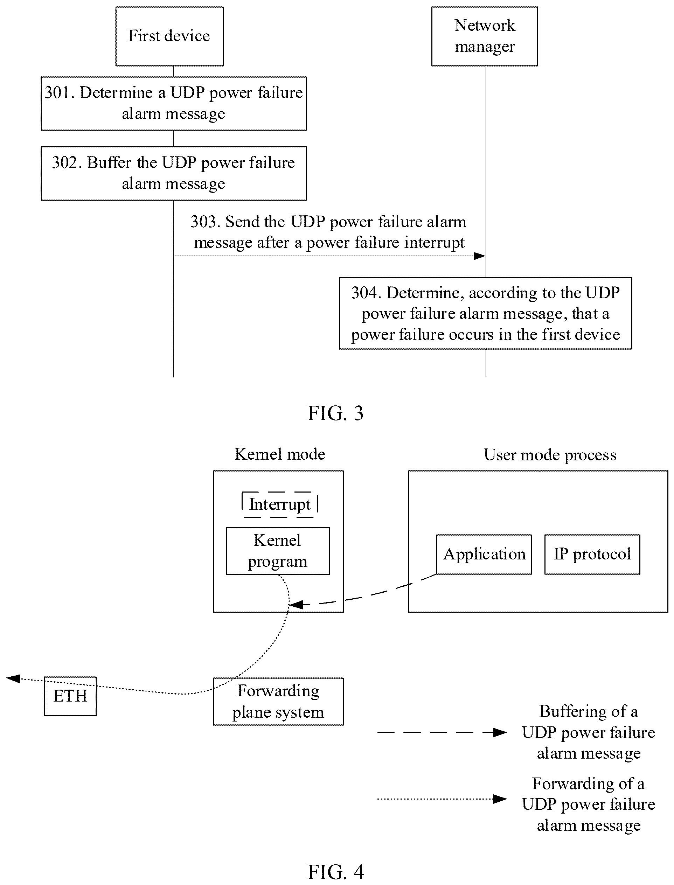

Based on the foregoing description, a device power failure alarm method provided in an embodiment of this application may be as shown in FIG. 3. The process of the method may include the following steps.

Step 301: The first device determines a UDP power failure alarm message.

The UDP power failure alarm message may be understood as a device power failure alarm, a device power failure indication, or the like. In this application, the UDP power failure alarm message may be a message encapsulated based on the UDP protocol, to indicate a device power failure alarm.

A priority of the UDP power failure alarm message may be higher than sending priorities of some or all messages other than the UDP power failure alarm message. For example, the priority of the UDP power failure alarm message may be higher than that of another type of alarm message. In this way, the priority of the UDP power failure alarm message may be raised, ensuring that the UDP power failure alarm message is preferentially sent.

Optionally, the priority of the UDP power failure alarm message may be a differentiated services code point (differentiated services code point, DSCP) priority, a virtual local area network (virtual local area network, VLAN) priority, or the like.

In an optional implementation, before the first device determines the UDP power failure alarm message, the first device may load a first program to kernel mode of the first device. The first program may be used to trigger at least one of the following processing: sending the UDP power failure alarm message according to the power failure interrupt, buffering the UDP power failure alarm message, associating power failure interrupt handling with the power failure interrupt, or the like. Further, based on the first program, the first device may implement buffering of the UDP power failure alarm message, and send the UDP power failure alarm message to the network manager after a power failure interrupt.

The kernel mode of the first device may also be referred to as kernel space of the first device, which is an area in which a kernel process/thread is located, and may be responsible for running the system, hardware interaction, and the like. For example, the kernel mode of the first device may be Linux kernel mode. Correspondingly, loading the first program to the kernel mode can trigger alarm handling using a UDP channel after a device power failure interrupt.

For example, the first program is a program related to a power failure alarm, and the first program may be referred to as a kernel (mode) program, or may be described in another manner. This is not limited in this application.

Optionally, associating the power failure interrupt handling with the power failure interrupt may also be described as power failure interrupt vector registration, or may be understood as registration of a power failure interrupt handling function, or may be described in another manner. This is not limited in this application.

In an example, the first device may load the first program to the kernel mode of the first device through a kernel module (xx.kernel object, xx.Ko), eBpf, or the like.

In a possible manner, the first device may determine the UDP power failure alarm message using the following method: The first device may determine the UDP power failure alarm message based on a UDP port number of the first device, a source IP address, a destination IP address, and a UDP port number of the network manager, where the source IP address and the destination IP address are used for a connection between the network manager and the first device. That the first device determines the UDP message may also be described as that the first device generates the UDP message, or the like.

When the first device establishes a connection to the network manager, the first device may record a source IP address and a destination IP address of the connection between the first device and the network manager. For example, the connection between the first device and the network manager may be a TCP connection between the first device and the network manager.

Optionally, after the first device is successfully connected to the network manager, the first device may receive a notification event from the network manager via an application (application, APP) of the first device. The notification event is used to notify power failure related information used by the network manager, for example, a UDP port number of the network manager and a first key.

In an example, the UDP port number of the network manager may be received by the first device from the network manager. For example, the UDP port number of the network manager is carried in the foregoing notification event. Alternatively, the UDP port number of the network manager may be preset.

In an optional implementation, the first device may receive the first key (for example, carried in the foregoing notification event) from the network manager, so that the first device can encrypt the UDP power failure alarm message based on the first key.

For example, the first device may encrypt the UDP power failure alarm message using an encryption method such as HMAC-SHA256.

For example, the first key may be generated by the network manager based on a random number, or by the network manager based on an identifier of the first device. That is, the network manager generates the first key based on the random number; or the network manager generates the first key based on the identifier of the first device.

In an example, the UDP power failure alarm message may include the identifier of the first device.

Step 302: The first device buffers the UDP power failure alarm message.

In an optional implementation, the first device may buffer the UDP power failure alarm message into the kernel mode of the first device.

For example, the first device may buffer the UDP power failure alarm message into the kernel mode of the first device using any of the following methods: completing user and kernel data transmission /netlink, writing to a process file system /procfs, writing kernel control parameters /sysctl, reading kernel files /sysfs, or the like.

Optionally, in the case of the first device buffering the UDP power failure alarm message into the kernel mode of the first device using any of the foregoing methods, the APP of the first device may deliver the UDP power failure alarm message to the kernel mode of the first device using the method such as /netlink, /procfs, /sysctl, or /sysfs.

In an example, the first device may buffer the UDP power failure alarm message after the first device establishes a connection to the network manager; or the first device may buffer the UDP power failure alarm message after a reconnection due to a change of an IP address of the first device and/or the network manager (that is, a TCP connection is re-established); or the first device may periodically buffer the UDP power failure alarm message.

Optionally, the first device buffering the UDP power failure alarm message into the kernel mode of the first device may be specifically the first device buffering the UDP power failure alarm message into the kernel-mode first program of the first device.

Step 303: The first device sends the UDP power failure alarm message to the network manager after a power failure interrupt.

The first device may send the UDP power failure alarm message to the network manager according to the priority of the UDP power failure alarm message described in step 301.

Optionally, a method for identifying a power failure interrupt of the first device may be: determining, by the first device, that a voltage change of hardware of the first device generates an interrupt.

For example, when a voltage of a board of the first device drops from 12 volts (V) to a first value, an interrupt is generated, in which case it is determined that the power failure interrupt of the first device occurs. Optionally, the first value may be 6 V, 8 V, or another value.

In an optional implementation, after the power failure interrupt of the first device, the first device may send the UDP power failure alarm message to the network manager using the following method: The first device sends the UDP power failure alarm message directly from the kernel mode of the first device to a forwarding plane system of the first device without protocol stack processing; and then the first device sends the UDP power failure alarm message to the network manager via the forwarding plane system.

Optionally, in the case of the first device sending the UDP power failure alarm message to the network manager, a UDP power failure alarm message buffer (buffer) may be sent by using a separate register, so as to avoid time consumption by pass and release operations (pv operations) due to contention with other messages for semaphore protection.

In a possible manner, the first device may send the UDP power failure alarm message to the network manager via the forwarding plane system according to the priority of the UDP power failure alarm message described in step 301. For example, the forwarding plane system of the first device may process the UDP power failure alarm message as a high-priority message. For example, a DSCP of the UDP power failure alarm message may be set to a high-priority DSCP, and/or a VLAN priority may be set to a high priority.

Optionally, because the UDP power failure alarm message is constructed before being forwarded via the forwarding plane, the first device may send the UDP power failure alarm message to the network manager via the forwarding plane system using any of the following methods: active/standby route switching, port aggregation (trunk), Internet Protocol Security (internet protocol security, IPsec), or the like.

Step 304: The network manager determines, according to the UDP power failure alarm message, that a power failure occurs in the first device.

In an optional implementation, after determining the first key and sending the first key to the first device, the network manager may record a correspondence between the first key and the first device.

For example, the correspondence between the first key and the first device may be a correspondence between the first key and an IP address of the first device, or a correspondence between the first key and the identifier of the first device.

Then, after the network manager receives the UDP power failure alarm message from the first device, the network manager may determine the first key corresponding to the first device according to the correspondence between the first key and the first device, so that the network manager can decrypt the UDP power failure alarm message based on the first key.

Optionally, the network manager determining the first key corresponding to the first device according to the correspondence between the first key and the first device may be implemented as follows: The network manager may determine the first key corresponding to the IP address of the first device according to the IP address of the first device and the correspondence between the first key and the first device. Alternatively, the network manager may determine the first key corresponding to the identifier of the first device according to the identifier of the first device included in the UDP power failure alarm message and the correspondence between the first key and the first device.

With the foregoing method, the first device can report the power failure alarm message through a UDP channel, reducing power failure alarm reporting time.

Based on the foregoing description, a diagram of an implementation process of the first device buffering and forwarding a UDP power failure alarm message may be as shown in FIG. 4. Specifically, the power failure alarm message may use a separate UDP channel. The first device may buffer the UDP power failure alarm message into Linux kernel mode in advance. After the Linux kernel mode receives a power failure interrupt, the buffered UDP power failure alarm message is sent directly from the kernel mode to a forwarding system. The forwarding system forwards the UDP power failure alarm message as a high-priority message.

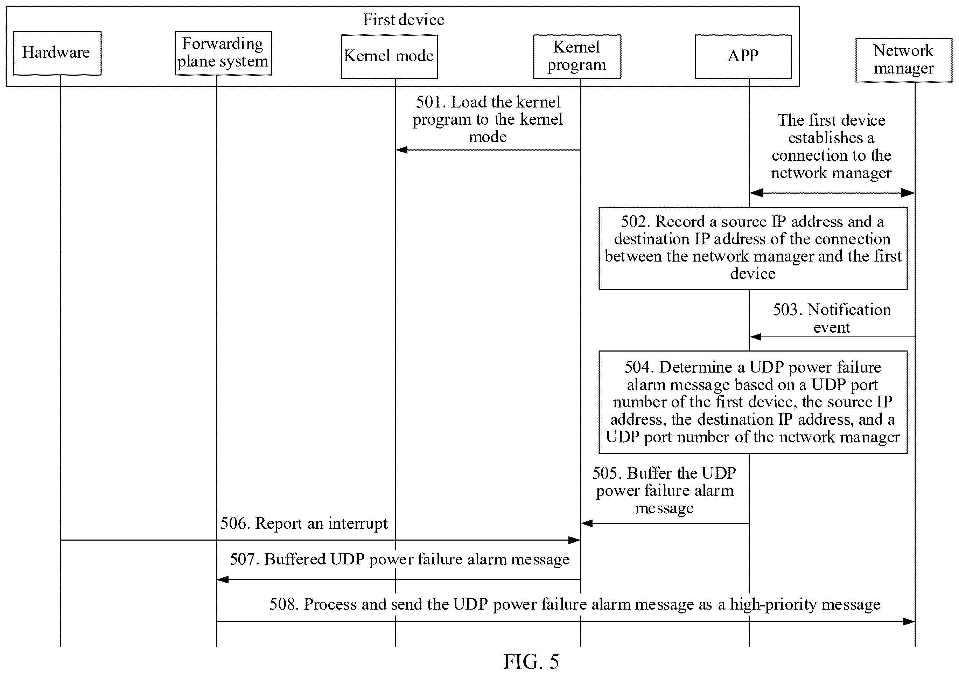

The power failure alarm method provided in embodiments of this application is described below by using a specific example. For example, the method involved in the embodiments shown in FIG. 3 and FIG. 4 is described in detail by using the example of the power failure alarm method shown in FIG. 5. The process of the example shown in FIG. 5 may be shown as follows.

Step 501: A first device loads (load) a kernel program related to a power failure alarm (that is, the first program described in the foregoing embodiment) to (Linux) kernel mode.

For example, the first device may load the kernel program to the kernel mode through xx.Ko, eBpf, or the like.

Specifically, for a specific description of the kernel program, refer to the related description of the first program in the embodiment shown in FIG. 3. Details are not described herein again.

Step 502: The first device establishes a connection to a network manager, and an APP of the first device records a source IP address and a destination IP address of the connection between the network manager and the first device.

For example, a TCP connection may be established between the first device and the network manager.

Step 503: The APP of the first device receives a notification event from the network manager, where the notification event is used to notify power failure related information used by the network manager.

Optionally, the notification event may carry a first key.

Optionally, the notification event may further carry a UDP port number of the network manager (that is, a UDP port number of the network manager that uses a power failure alarm).

Step 504: The APP of the first device determines a UDP power failure alarm message based on a UDP port number of the first device, the source IP address, the destination IP address, and the UDP port number of the network manager.

Optionally, when the notification event carries the first key, the APP of the first device may encrypt the UDP power failure alarm message based on the first key.

For details, refer to the related description of step 301 in the embodiment shown in FIG. 3.

Step 505: The APP of the first device buffers the UDP power failure alarm message into the kernel-mode kernel program of the first device.

Optionally, the APP of the first device may buffer the UDP power failure alarm message into the kernel-mode kernel program using any of the following methods: invoking /netlink, /procfs, /sysctl, /sysfs, or the like.

For details, refer to the related description of step 302 in the embodiment shown in FIG. 3.

Step 506: When a power failure occurs in the first device, the hardware of the first device generates an interrupt and triggers interrupt handling; that is, the hardware reports the interrupt to the kernel-mode kernel program.

Step 507: After receiving the interrupt, the kernel program may send the buffered UDP power failure alarm message directly to a forwarding plane system of the first device without protocol stack processing.

Optionally, a message buffer (buffer) may be sent by the kernel program using a separate register, to avoid time consumption by pv operations due to contention with other messages for semaphore protection.

Step 508: The forwarding plane system processes and sends the UDP power failure alarm message as a high-priority message to the network manager.

For example, the forwarding plane system may set a DSCP of the message to a high-priority DSCP, and a VLAN priority to a high priority. Because the message is a message constructed before forwarding, various forwarding processing such as active/standby route switching, trunk, and IPsec is supported.

It should be noted that, when the network changes, for example, when the IP address of the first device or the network manager changes, a TCP connection needs to be re-established, in which case step 502 to step 505 are repeated.

With the foregoing example, the power failure alarm message can be reported through a UDP channel, reducing power failure alarm reporting time. For example, time for power failure alarming of the first device may be reduced from 20-200 ms (ms) to 0.03 ms.

It should be noted that the foregoing device power failure alarm method in this application may also be applicable to an IPsec scenario, a scenario of a management plane encrypted with IPsec, or another scenario. This is not limited in this application.

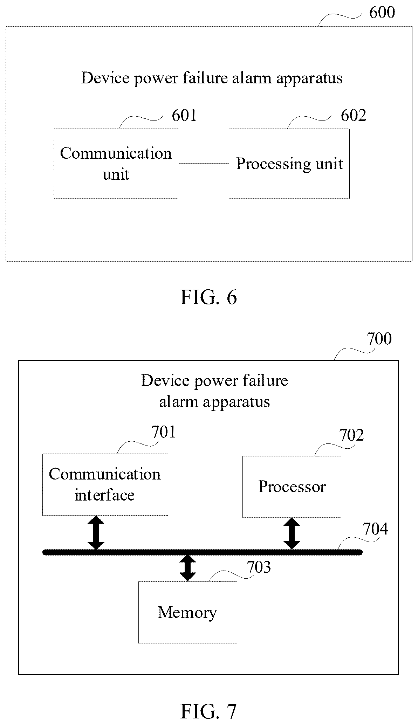

Based on the foregoing embodiments, an embodiment of this application further provides a device power failure alarm apparatus. Refer to FIG. 6. A device power failure alarm apparatus 600 may include a communication unit 601 and a processing unit 602. The communication unit 601 may be configured to receive and send information (for example, a message) or the like. The processing unit 602 may control and manage actions of the device power failure alarm apparatus 600. The processing unit 602 may further control operations performed by the communication unit 601.

For example, the device power failure alarm apparatus 600 may be the first device in the foregoing embodiment, a processor of the first device, a chip, a chip system, a functional module, or the like. Alternatively, the device power failure alarm apparatus 600 may also be the network manager in the foregoing embodiment, a processor of the network manager, a chip, a chip system, a functional module, or the like.

In an embodiment, the device power failure alarm apparatus 600, when configured to implement a function of the first device in the foregoing embodiment, may include the following: The processing unit 602 may be configured to determine a UDP power failure alarm message and buffer the UDP power failure alarm message; and the communication unit 601 may be configured to send the UDP power failure alarm message to a network manager after a power failure interrupt.

In an optional implementation, the processing unit 602, when buffering the UDP power failure alarm message, may be configured to buffer the UDP power failure alarm message into kernel mode.

For example, the processing unit 602, when buffering the UDP power failure alarm message into the kernel mode of the first device, may be configured to buffer the UDP power failure alarm message into the kernel mode of the first device using any of the following methods: completing user and kernel data transmission /netlink, writing to a process file system /procfs, writing kernel control parameters /sysctl, or reading kernel files /sysfs.

In a possible manner, the communication unit 601, when sending the UDP power failure alarm message to the network manager, may be configured to send the UDP power failure alarm message to the network manager according to a priority of the UDP power failure alarm message.

Optionally, the processing unit 602 may be further configured to send the UDP power failure alarm message from the kernel mode to a forwarding plane system; and the communication unit 601, when sending the UDP power failure alarm message to the network manager, may be configured to send the UDP power failure alarm message to the network manager via the forwarding plane system.

Optionally, the communication unit 601, when sending the UDP message to the network manager via the forwarding plane system, may be configured to send the UDP power failure alarm message to the network manager via the forwarding plane system according to a priority of the UDP power failure alarm message.

For example, the priority of the UDP power failure alarm message may be higher than sending priorities of some or all messages other than the UDP power failure alarm message.

For example, the priority of the UDP power failure alarm message may be a differentiated services code point DSCP priority or a virtual local area network VLAN priority.

In an example, the processing unit 602, before determining the UDP power failure alarm message, may be further configured to load a first program to the kernel mode, where the first program is used to trigger at least one of the following processing: sending the UDP power failure alarm message according to the power failure interrupt, buffering the UDP power failure alarm message, or associating power failure interrupt handling with the power failure interrupt.

For example, the processing unit 602, when determining the UDP power failure alarm message, may be configured to determine the UDP power failure alarm message based on a UDP port number of the first device, a source Internet Protocol IP address, a destination IP address, and a UDP port number of the network manager, where the source IP address and the destination IP address are used for a connection between the network manager and the first device.

Optionally, the UDP port number of the network manager is received by the communication unit 601 from the network manager; or the UDP port number of the network manager is preset.

In a possible manner, the communication unit 601 may be further configured to receive a first key from the network manager; and the processing unit 602 may be further configured to encrypt the UDP power failure alarm message based on the first key.

For example, the first key may be generated based on a random number, or based on an identifier of the first device.

In a possible implementation, the processing unit 602, when buffering the UDP power failure alarm message, may be configured to:
buffer the UDP power failure alarm message after the first device establishes a connection to the network manager; or
buffer the UDP power failure alarm message after a reconnection due to a change of an IP address of the first device and/or the network manager; or
periodically buffer the UDP power failure alarm message.

For example, the UDP power failure alarm message includes the identifier of the first device.

In an embodiment, the device power failure alarm apparatus 600, when configured to implement a function of the network manager in the foregoing embodiment, may include the following: The communication unit 601 may be configured to receive a user datagram protocol UDP power failure alarm message from a first device; and the processing unit 602 may be configured to determine, according to the UDP power failure alarm message, that a power failure occurs in the first device.

Optionally, the communication unit 601 may be further configured to send a UDP port number of the network manager to the first device, where the UDP port number of the network manager is used by the first device to determine the UDP power failure alarm message.

Optionally, the communication unit 601 may be further configured to send a first key to the first device, where the first key is used to encrypt the UDP power failure alarm message.

In an optional implementation, the processing unit 602 may be further configured to generate the first key based on a random number, or generate the first key based on an identifier of the first device.

In an optional implementation, the processing unit 602 may be further configured to record a correspondence between the first key and the first device.

For example, the correspondence between the first key and the first device includes a correspondence between the first key and an IP address of the first device, or a correspondence between the first key and the identifier of the first device.

In a possible manner, the processing unit 602 may be further configured to determine the first key corresponding to the first device according to the correspondence between the first key and the first device, and decrypt the UDP power failure alarm message based on the first key.

Optionally, the processing unit 602, when determining the first key corresponding to the first device according to the correspondence between the first key and the first device, may be configured to determine the first key corresponding to the IP address of the first device according to the IP address of the first device and the correspondence between the first key and the first device, or determine the first key corresponding to the identifier of the first device according to the identifier of the first device included in the UDP power failure alarm message and the correspondence between the first key and the first device.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in the form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of a software product. The software product is stored in a storage medium and includes several instructions for instructing a computer device (which may be a personal computer, a server, a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a device power failure alarm apparatus. Refer to FIG. 7. A device power failure alarm apparatus 700 may include a communication interface 701 and a processor 702. Optionally, the device power failure alarm apparatus 700 may further include a memory 703. The memory 703 may be disposed inside the device power failure alarm apparatus 700, or may be disposed outside the device power failure alarm apparatus 700. The processor 702 may control the communication interface 701 to receive and send a packet, information, a message, data, or the like.

Specifically, the processor 702 may be a central processing unit (central processing unit, CPU), a network processor (network processor, NP), or a combination of a CPU and an NP. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication interface 701, the processor 702, and the memory 703 are connected to each other. Optionally, the communication interface 701, the processor 702, and the memory 703 are connected to each other through a bus 704. The bus 704 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 7, but this does not mean that there is only one bus or only one type of bus.

In an optional implementation, the memory 703 is configured to store a program and the like. Specifically, the program may include program code, and the program code includes computer operation instructions. The memory 703 may include a RAM, and may further include a non-volatile memory (non-volatile memory), for example, one or more disk memories. The processor 702 executes an application stored in the memory 703 to implement the foregoing functions, so as to implement the functions of the device power failure alarm apparatus 700.

For example, the device power failure alarm apparatus 700 may be the first device in the foregoing embodiment, or the network manager in the foregoing embodiment.

In an embodiment, when the device power failure alarm apparatus 700 performs the functions of the first device in the foregoing method embodiment, the communication interface 701 may implement the receiving and sending operations performed by the first device in the foregoing method embodiment; and the processor 702 may implement operations other than the receiving and sending operations performed by the first device in the foregoing method embodiment. For detailed related descriptions, refer to related descriptions in the foregoing embodiments. Details are not described herein again.

In another embodiment, when the device power failure alarm apparatus 700 performs the functions of the network manager in the foregoing method embodiment, the communication interface 701 may implement the receiving and sending operations performed by the network manager in the foregoing method embodiment; and the processor 702 may implement operations other than the receiving and sending operations performed by the network manager in the foregoing method embodiment. For detailed related descriptions, refer to related descriptions in the foregoing embodiments. Details are not described herein again.

Based on the foregoing embodiments, an embodiment of this application provides a system. The system may include the first device, the network manager, and the like in the foregoing embodiments.

An embodiment of this application further provides a computer-readable storage medium. The computer-readable storage medium is configured to store a computer program. When the computer program is executed by a computer, the computer may implement the device power failure alarm method provided in the foregoing method embodiments.

An embodiment of this application further provides a computer program product. The computer program product is configured to store a computer program. When the computer program is executed by a computer, the computer may implement the device power failure alarm method provided in the foregoing method embodiments.

An embodiment of this application further provides a chip, including a processor. The processor is coupled to a memory and configured to invoke a program in the memory, so that the chip implements the device power failure alarm method provided in the foregoing method embodiments.

An embodiment of this application further provides a chip. The chip is coupled to a memory, and the chip is configured to implement the device power failure alarm method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A device power failure alarm method, comprising:
determining, by a first device, a user datagram protocol UDP power failure alarm message;
buffering, by the first device, the UDP power failure alarm message; and
sending, by the first device, the UDP power failure alarm message to a network manager after a power failure interrupt.

2. The method according to claim 1, wherein buffering, by the first device, the UDP power failure alarm message comprises:
buffering, by the first device, the UDP power failure alarm message into kernel mode of the first device.

3. The method according to claim 2, wherein buffering, by the first device, the UDP power failure alarm message into the kernel mode of the first device comprises:
buffering, by the first device, the UDP power failure alarm message into the kernel mode of the first device using any of the following methods: completing user and kernel data transmission /netlink, writing to a process file system /procfs, writing kernel control parameters /sysctl, or reading kernel files /sysfs.

4. The method according to any one of claims 1 to 3, wherein sending, by the first device, the UDP power failure alarm message to the network manager comprises:
sending, by the first device, the UDP power failure alarm message to the network manager according to a priority of the UDP power failure alarm message.

5. The method according to claim 2 or 3, wherein sending, by the first device, the UDP power failure alarm message to the network manager comprises:
sending, by the first device, the UDP power failure alarm message from the kernel mode of the first device to a forwarding plane system of the first device; and
sending, by the first device, the UDP power failure alarm message to the network manager via the forwarding plane system.

6. The method according to claim 5, wherein sending, by the first device, the UDP message to the network manager via the forwarding plane system comprises:
sending, by the first device, the UDP power failure alarm message to the network manager via the forwarding plane system according to a priority of the UDP power failure alarm message.

7. The method according to claim 4 or 6, wherein the priority of the UDP power failure alarm message is higher than sending priorities of some or all messages other than the UDP power failure alarm message.

8. The method according to claim 4, 6, or 7, wherein the priority of the UDP power failure alarm message is a differentiated services code point DSCP priority or a virtual local area network VLAN priority.

9. The method according to any one of claims 2 and 3 or 5 and 6, wherein before determining, by the first device, the UDP power failure alarm message, the method further comprises:
loading, by the first device, a first program to the kernel mode of the first device, wherein the first program is used to trigger at least one of the following processing: sending the UDP power failure alarm message according to the power failure interrupt, buffering the UDP power failure alarm message, or associating power failure interrupt handling with the power failure interrupt.

10. The method according to any one of claims 1 to 9, wherein determining, by the first device, the UDP power failure alarm message comprises:
determining, by the first device, the UDP power failure alarm message based on a UDP port number of the first device, a source Internet Protocol IP address, a destination IP address, and a UDP port number of the network manager, wherein the source IP address and the destination IP address are used for a connection between the network manager and the first device.

11. The method according to claim 10, wherein the UDP port number of the network manager is received by the first device from the network manager; or the UDP port number of the network manager is preset.

12. The method according to any one of claims 1 to 11, wherein the method further comprises:
receiving, by the first device, a first key from the network manager; and
encrypting, by the first device, the UDP power failure alarm message based on the first key.

13. The method according to claim 12, wherein the first key is generated based on a random number, or based on an identifier of the first device.

14. The method according to any one of claims 1 to 13, wherein buffering, by the first device, the UDP power failure alarm message comprises:
buffering, by the first device, the UDP power failure alarm message after the first device establishes a connection to the network manager; or
buffering, by the first device, the UDP power failure alarm message after a reconnection due to a change of an IP address of the first device and/or the network manager; or
periodically buffering, by the first device, the UDP power failure alarm message.

15. The method according to any one of claims 1 to 14, wherein the UDP power failure alarm message comprises the identifier of the first device.

16. A device power failure alarm method, comprising:
receiving, by a network manager, a user datagram protocol UDP power failure alarm message from a first device; and
determining, by the network manager according to the UDP power failure alarm message, that a power failure occurs in the first device.

17. The method according to claim 16, further comprising:
sending, by the network manager, a UDP port number of the network manager to the first device, wherein the UDP port number of the network manager is used by the first device to determine the UDP power failure alarm message.

18. The method according to claim 16 or 17, further comprising:
sending, by the network manager, a first key to the first device, wherein the first key is used to encrypt the UDP power failure alarm message.

19. The method according to claim 18, further comprising:
generating, by the network manager, the first key based on a random number; or
generating, by the network manager, the first key based on an identifier of the first device.

20. The method according to claim 18 or 19, further comprising:
recording, by the network manager, a correspondence between the first key and the first device.

21. The method according to claim 20, wherein the correspondence between the first key and the first device comprises:
a correspondence between the first key and an IP address of the first device; or
a correspondence between the first key and the identifier of the first device.

22. The method according to claim 20 or 21, further comprising:
determining, by the network manager, the first key corresponding to the first device according to the correspondence between the first key and the first device; and
decrypting, by the network manager, the UDP power failure alarm message based on the first key.

23. The method according to claim 22, wherein determining, by the network manager, the first key corresponding to the first device according to the correspondence between the first key and the first device comprises:
determining, by the network manager, the first key corresponding to the IP address of the first device according to the IP address of the first device and the correspondence between the first key and the first device; or
determining, by the network manager, the first key corresponding to the identifier of the first device according to the identifier of the first device comprised in the UDP power failure alarm message and the correspondence between the first key and the first device.

24. A device power failure alarm apparatus, comprising a module or unit configured to execute the method according to any one of claims 1 to 15.

25. A device power failure alarm apparatus, comprising a module or unit configured to execute the method according to any one of claims 16 to 23.

26. A device power failure alarm apparatus, comprising a processor and a communication interface, wherein
the communication interface is configured to receive and send a message; and
the processor is coupled to a memory and configured to invoke computer instructions in the memory, to perform the method according to any one of claims 1 to 15 through the communication interface.

27. A device power failure alarm apparatus, comprising a processor and a communication interface, wherein
the communication interface is configured to receive and send a message; and
the processor is coupled to a memory and configured to invoke computer instructions in the memory, to perform the method according to any one of claims 16 to 23 through the communication interface.

28. A computer-readable storage medium, wherein the computer-readable storage medium stores computer-executable instructions, and when the computer-executable instructions are invoked by a computer, the method according to any one of claims 1 to 15 or the method according to any one of claims 16 to 23 is performed.

29. A computer program product, comprising instructions, wherein when the instructions are run on a computer, the method according to any one of claims 1 to 15 or the method according to any one of claims 16 to 23 is performed.

30. A chip, wherein the chip is coupled to a memory and configured to read and execute program instructions stored in the memory, to implement the method according to any one of claims 1 to 15 or the method according to any one of claims 16 to 23.
